# EUROPEAN PATENT APPLICATION

(11) **EP 4 683 147 A1**
(43) Date of publication of application: **21.01.2026**
(21) Application number: 24895767.2
(22) Date of filing: 15.08.2024
(51) Int. Cl.: H02G 15/10, H02G 15/013, H02G 15/00

(54) **SUBMARINE CABLE JOINT BOX AND SUBMARINE CABLE SYSTEM**

(30) Priority: 27.11.2023 CN 202323202511 U
(71) Applicant: Zhongtian Technology Marine Systems Co., Ltd., Nantong, Jiangsu 226010 (CN); Jiangsu Zhongtian Technology Co., Ltd., Nantong, Jiangsu 226000 (CN)
(72) Inventor: ZHANG, Suhao, Nantong, Jiangsu 226010 (CN); FENG, Yawen, Nantong, Jiangsu 226010 (CN); LU, Qi, Nantong, Jiangsu 226010 (CN); GE, Zhixiao, Nantong, Jiangsu 226010 (CN); DONG, Wulei, Nantong, Jiangsu 226010 (CN); LIU, Xiao, Nantong, Jiangsu 226010 (CN)
(74) Representative: J A Kemp LLP
(86) International application number: PCT/CN2024/112519
(87) International publication number: WO 2025/112666

(57) **Abstract**

The present application relates to the technical field of submarine cable fittings, and provided are a submarine cable joint box and a submarine cable system. Two submarine cables are joined by an intermediate connector. The submarine cable joint box includes: sealing ends, a sealing cylinder and a heat shrink tube, where the sealing cylinder is sleeved on the intermediate connector; the submarine cables at two ends of the intermediate connector are respectively sleeved with the sealing ends; two ends of the sealing cylinder are in sealed connection with the corresponding sealing ends respectively. The two sealing ends, the sealing cylinder and the intermediate connector form an accommodation chamber, and the accommodation chamber is filled with a waterproof sealant. The heat shrink tube is sleeved on the sealing cylinder and the sealing ends, and two ends of the heat shrink tube are in heat shrink connection with the submarine cables at the two ends respectively. The present application uses the mode of combining the sealing ends and the heat shrink tube to perform double sealing, thereby improving the sealing performance of the repair joint box in deepwater areas.

## Description

The present application claims priority to Chinese Patent Application No. 202323202511.5 filed with China National Intellectual Property Administration on November 27, 2023 and entitled "Submarine Cable Joint Box and Submarine Cable System", which is hereby incorporated by reference in its entirety.

### TECHNICAL FIELD

The present application relates to the technical field of submarine cable fittings, and in particular to a submarine cable joint box and a submarine cable system.

### BACKGROUND

A submarine cable is a submarine cable or submarine optical cable laid in the ocean, and is an important device for offshore power or telecommunication transmission. With the development of offshore wind power generation, submarine oil and gas exploitation and communication technologies, the laying quantity of submarine cables is increasing year by year. The problems of submarine cables existing in the application process have also become increasingly prominent. During the laying or operation, the submarine cable will inevitably be subjected to tensile forces or other external impacts, such as abrasion from sand and gravel, anchor damage, etc., which may cause damage to the submarine cable. When the submarine cable is damaged, it needs to be repaired by means of a joint box. Due to the limitation of production length, the laying of long-length submarine cables also requires a joint box for splicing.

The joint box is used to restore not only the electrical performance of the submarine cable, but also its mechanical performance. However, the underwater environment is harsh, it is particularly important to ensure the sealing of the joint box, especially under the operating condition at large water depth. In the prior art, a single-layer fluororubber sealing ring and a heat shrink tube are used for sealing, which cannot meet the waterproof sealing requirements of the joint box in deepwater areas.

### SUMMARY

The present application provides a submarine cable joint box and a submarine cable system to solve the problem in the prior art that the sealing of the submarine cable joint box cannot meet the waterproof sealing requirements in deepwater areas.

The present application provides a submarine cable joint box, two submarine cables are joined by an intermediate connector, the submarine cable joint box including: sealing ends, a sealing cylinder and a heat shrink tube, where the sealing cylinder is sleeved on the intermediate connector; the submarine cables at two ends of the intermediate connector are sleeved with the sealing ends respectively, and two ends of the sealing cylinder are in sealed connection with corresponding sealing ends respectively; the two sealing ends, the sealing cylinder and the intermediate connector form an accommodation chamber, and the accommodation chamber is filled with a waterproof sealant; the heat shrink tube is sleeved on the sealing cylinder and the sealing ends, and two ends of the heat shrink tube are in heat shrink connection with the submarine cables at the two ends respectively.

According to the submarine cable joint box provided by the present application, the sealing end includes a first sealing member, and the first sealing member is sleeved on a peripheral wall of the submarine cable and clamped between the sealing cylinder and the submarine cable.

According to the submarine cable joint box provided by the present application, two ends of the sealing cylinder are each provided with an abutting part, the abutting part abuts against a corresponding submarine cable, the sealing end further includes a first compressing member, the first compressing member is connected to the sealing cylinder, and the first compressing member cooperates with the abutting part to restrict the first sealing member.

According to the submarine cable joint box provided by the present application, the sealing end further includes a second sealing member and a second compressing member, the second sealing member and the second compressing member are clamped between the submarine cable and the sealing cylinder sequentially; where the first sealing member is located between the abutting part and the second compressing member, and the second sealing member is located between the first compressing member and the second compressing member.

According to the submarine cable joint box provided by the present application, the second sealing member is a V-shaped sealing member, an opening of the V-shaped sealing member faces the first compressing member, the first compressing member has an end part opposite to the opening, and a side of the second compressing member close to the V-shaped sealing member is provided with an arc-shaped groove matching a shape of the end part.

According to the submarine cable joint box provided by the present application, the first sealing member is a conical sealing member, and an inner wall of the sealing cylinder is adapted to the conical sealing member.

According to the submarine cable joint box provided by the present application, the submarine cable joint box further includes a sealing assembly, the sealing cylinder includes a plurality of sequentially connected cylinder bodies, and the sealing assembly is clamped between a connection of two adjacent cylinder bodies and the intermediate connector.

According to the submarine cable joint box provided by the present application, the sealing assembly includes a sealing bushing, and the sealing bushing is sleeved on a peripheral wall of the intermediate connector.

According to the submarine cable joint box provided by the present application, the sealing assembly further includes a plurality of third sealing members, and the plurality of third sealing members are spaced apart and clamped between the sealing bushing and the cylinder body.

The present application also provides a submarine cable system, including the submarine cable joint box as described in any one of the foregoing.

In the submarine cable joint box and submarine cable system provided in the present application, by sleeving a sealing cylinder on an outer wall surface of the intermediate connector, the intermediate connector is protected; and by arranging sealing ends between the submarine cables at two ends of the intermediate connector and the sealing cylinder, and forming an accommodation chamber by the two sealing ends, the sealing cylinder and the intermediate connector, the sealing ends can prevent external water from entering the accommodation chamber through the gap between the sealing cylinder and the submarine cable to contact the intermediate connector, thereby achieving sealing; by filling the accommodation chamber with a waterproof sealant, water blocking and pressure bearing may be achieved, so as to reduce the impact of seawater on the submarine cable; by sleeving the heat shrink tube on the outer wall surface of the sealing cylinder, and connecting two ends of the heat shrink tube with the submarine cables at the two ends respectively through heat shrink connection, external water is prevented from contacting a sealed joint, thereby achieving sealing. The present application adopts the mode of combining the sealing ends and the heat shrink tube to perform double sealing, thereby improving the sealing performance of the repair joint box in deepwater areas.

### BRIEF DESCRIPTION OF DRAWINGS

To describe the technical solutions of the present application or in the prior art more clearly, the following briefly introduces the accompanying drawings needed for describing the embodiments or the prior art. Apparently, the accompanying drawings in the following description are merely some embodiments of the present application, and for the persons of ordinary skill in the art, they may still derive other drawings from these accompanying drawings without creative effort.
FIG. 1 is a schematic cross-sectional structural diagram of a submarine cable provided in the present application.
FIG. 2 is a partial enlarged diagram of area A in FIG. 1 provided in the present application.
FIG. 3 is a partial enlarged diagram of area B in FIG. 1 provided in the present application.

### Reference signs:

1. submarine cable; 2. intermediate connector; 3. sealing cylinder; 31. abutting part; 4. sealing end; 41. first sealing member; 42. first compressing member; 43. second sealing member; 44. second compressing member; 5. heat shrink tube; 6. accommodation chamber; 7. waterproof sealant; 8. sealing assembly; 81. sealing bushing; 82. third sealing member.

### DESCRIPTION OF EMBODIMENTS

To make the objectives, technical solutions, and advantages of the present application clearer, the following clearly and comprehensively describes the technical solutions of the present application with reference to the accompanying drawings of the present application. Apparently, the described embodiments are merely some rather than all embodiments of the present application. All other embodiments obtained by persons of ordinary skill in the art based on embodiments of the present application without creative effort shall fall within the protection scope of the present application.

In the description of the embodiments of the present application, it should be noted that, unless otherwise clearly specified and defined, the terms "communicate" and "connect" shall be understood in a broad sense; for example, they may refer to fixed connection, detachable connection, or integral connection; they may refer to mechanical connection or electrical connection; or they may refer to direct connection or indirect connection through an intermediate medium. For a person of ordinary skill in the art, the specific meanings of the above terms in the embodiments of the present application can be understood according to specific situations.

In the description of the embodiments of the present application, it should be noted that the orientations or positional relationships indicated by the terms "center", "longitudinal", "transverse", "upper", "lower", "front", "rear", "left", "right", "vertical", "horizontal", "top", "bottom", "inner" and "outer" are based on the orientations or positional relationships shown in the accompanying drawings, and are only for the convenience of describing the embodiments of the present application and simplifying the description, rather than indicating or implying that the device or element referred to must have a specific orientation, or be constructed and operated in a specific orientation, and thus they shall not be construed as a limitation on the embodiments of the present application.

In addition, the terms "first" and "second" are only used for descriptive purpose, and shall not be understood as indicating or implying relative importance or implicitly indicating the number of technical features indicated. Therefore, the features defined with "first" and "second" may explicitly or implicitly include one or more such features. In the description of the present application, the meaning of "a plurality of" is two or more, unless otherwise clearly and specifically defined.

The embodiments of the present application will be described in detail below. Examples of the embodiments are shown in the drawings, in which the same or similar reference numerals denote the same or similar elements or elements with the same or similar functions throughout. The embodiments described below with reference to the drawings are exemplary and are intended to explain the present application, rather than being construed as a limitation on the present application.

The following disclosure provides many different embodiments or examples for implementing different structures of the present application. To simplify the disclosure of the present application, the components and arrangements of specific examples are described below. Apparently, they are merely examples and are not intended to limit the present application. In addition, the present application may repeat reference numerals and/or letters in different examples. Such repetition is for the purpose of simplification and clarity, and does not in itself indicate the relationship between the various embodiments and/or arrangements discussed. In addition, the present application provides examples of various specific processes and materials, but a person of ordinary skill in the art may be aware of the applicability of other processes and/or the use of other materials.

With the vigorous development of industries such as offshore wind power construction and offshore oil and gas exploitation, the laying of submarine cables is also gradually developing towards the deeper and more distant sea. The continuous increase in the water depth for submarine cable application places higher requirements on the waterproof sealing performance of submarine cable fitting products. The submarine cable joint box is used to connect two sections of submarine cables, and its operating environment is usually under water; therefore, it is particularly important to restore the sealing performance of the single-phase PE sheath of the submarine cable in the repair joint box.

At present, the conventional single-phase sealing of submarine cables is usually suitable for working conditions with water depth less than 100 meters, and cannot meet the sealing requirements for submarine cables in greater water depths. Therefore, it is necessary to design a single-phase sealing structure for submarine cable 1 that can be applied to water depths ranging from 100 meters to 500 meters.

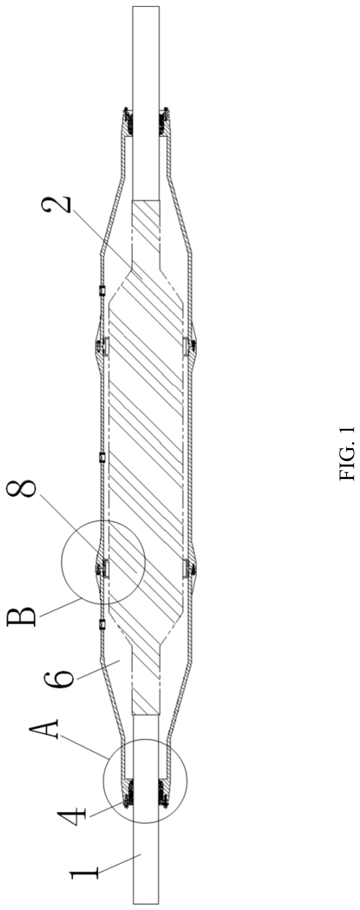

The submarine cable joint box and submarine cable system provided in the present application are described below with reference to FIGS. 1-3.

Two submarine cables 1 are joined by an intermediate connector 2, and the submarine cable joint box includes: sealing ends 4, a sealing cylinder 3 and a heat shrink tube 5; where the sealing cylinder 3 is sleeved on the intermediate connector 2, the submarine cables 1 at two ends of the intermediate connector 2 are sleeved with the sealing ends 4 respectively, and two ends of the sealing cylinder 3 are in sealed connection with the corresponding sealing ends 4 respectively; the two sealing ends 4, the sealing cylinder 3 and the intermediate connector 2 form an accommodation chamber 6, and the accommodation chamber 6 is filled with a waterproof sealant 7; the heat shrink tube 5 is sleeved on the sealing cylinder 3 and the sealing ends 4, and two ends of the heat shrink tube 5 are in heat shrink connection with the submarine cables 1 at the two ends respectively.

The sealing cylinder 3 is sleeved on the intermediate connector 2, and a length of the sealing cylinder 3 is greater than that of the intermediate connector 2. It can be understood that, there are gaps between the two ends of the sealing cylinder 3 and the submarine cables 1 at two ends of the intermediate connector 2, the sealing end 4s are clamped between the sealing cylinder 3 and the submarine cables 1, so as to prevent seawater from entering the sealing cylinder 3 through a space between an inner wall of the sealing cylinder 3 and an outer wall of the submarine cable 1 to contact the intermediate connector 2, thereby achieving sealing; further, the sealing end 4 is connected to the sealing cylinder 3 to limit the position of the sealing end 4; the two sealing ends 4, the sealing cylinder 3, the intermediate connector 2 and the submarine cables 1 enclose to form the accommodation chamber 6, and the accommodation chamber 6 is filled with the waterproof sealant 7, which is used for water blocking and fixing under pressure, so as to reduce the pressure of seawater on the submarine cable 1.

Further, the submarine cable joint box further includes the heat shrink tube 5, the heat shrink tube 5 is arranged on an outer wall surface of the sealing cylinder 3, an inner wall surface of the heat shrink tube 5 is fitted to the outer wall surface of the sealing cylinder 3, and a length of the heat shrink tube 5 is greater than or equal to that of the sealing cylinder 3; in the case that the length of the heat shrink tube 5 is equal to that of the sealing cylinder 3, two ends of the heat shrink tube 5 are in heat shrink connection with two ends of the outer wall surface of the sealing cylinder 3 respectively, so as to protect the sealing cylinder 3 and enhance sealing; in the case that the length of the heat shrink tube 5 is greater than that of the sealing cylinder 3, two ends of the heat shrink tube 5 are in heat shrink connection with outer wall surfaces of the corresponding submarine cables 1 respectively, so as to achieve the effect of protecting the sealing cylinder 3 and the sealing ends 4 and enhance sealing.

In the submarine cable joint box provided in the present application, by sleeving a sealing cylinder 3 on an outer wall surface of the intermediate connector 2, the intermediate connector 2 is protected; by arranging sealing ends 4 between the submarine cables 1 at two ends of the intermediate connector 2 and the sealing cylinder 3, and forming an accommodation chamber 6 by the two sealing ends 4, the sealing cylinder 3 and the intermediate connector 2, the sealing ends 4 can prevent external water from entering the accommodation chamber 6 through the gap between the sealing cylinder 3 and the submarine cable 1 to contact the intermediate connector 2, thereby achieving sealing; by filling the accommodation chamber 6 with a waterproof sealant 7, it is possible to achieve water blocking and pressure bearing, so as to reduce the impact of seawater on the submarine cable 1; by sleeving the heat shrink tube 5 on an outer wall surface of the sealing cylinder 3, and connecting two ends of the heat shrink tube 5 with the submarine cables 1 at the two ends through heat shrink connection respectively, external water is prevented from contacting a sealed joint, thereby achieving sealing. The present application adopts the mode of combining the sealing ends 4 and the heat shrink tube 5 to perform double sealing, thereby improving the sealing performance of the submarine cable repair joint box in deepwater areas.

The sealing end 4 in the present application includes a first sealing member 41. The first sealing member 41 is of an annular structure, the first sealing member 41 is sleeved on a peripheral wall of the submarine cable 1 and clamped between the sealing cylinder 3 and the submarine cable 1, that is, an inner wall surface of the first sealing member 41 is fitted to an outer wall surface of the submarine cable 1, and an outer wall surface of the first sealing member 41 is fitted to the cylinder body, so as to achieve sealing and prevent external water from contacting the intermediate connector 2.

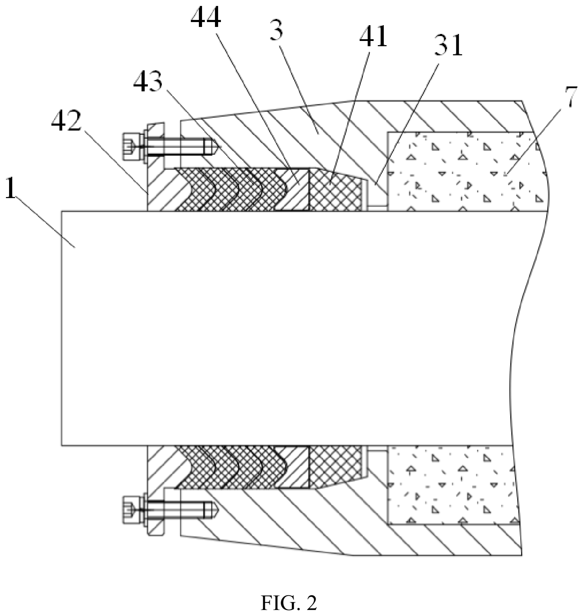

With reference to FIG. 1 and FIG. 2, two ends of the sealing cylinder 3 are each provided with an abutting part 31, the abutting part 31 abuts against a corresponding submarine cable 1, the sealing cylinder 3, the submarine cable 1 and the intermediate connector 2 form the accommodation chamber 6, and the accommodation chamber 6 is filled with the waterproof sealant 7 for water blocking and pressure bearing. The sealing end 4 further includes a first compressing member 42, the first compressing member 42 is connected to the sealing cylinder 3, and the first compressing member 42 cooperates with the abutting part 31 to restrict the first sealing member 41.

Specifically, the first compressing member 42 includes a compressing part and a connecting part, the compressing part is of an annular structure, the compressing part is embedded between the submarine cable 1 and the cylinder body, an outer wall surface of the compressing part is fitted to an inner wall surface of the sealing cylinder 3, an inner wall surface of the compressing part is fitted to the submarine cable 1, and the compressing part cooperates with the abutting part 31 to press the first sealing member 41 between the compressing part and the abutting part 31.

Further, the connecting part is connected to the compressing part, and the connecting part is connected to the sealing cylinder 3; as shown in FIG. 2, the connecting part is perpendicular to the compressing part, and the connecting part extends in a direction away from the compressing part, the sealing cylinder 3 is pressed on the compressing part, the connecting part is located on an outer side of an end face of the sealing cylinder 3, and the connecting part is connected to the sealing cylinder 3 through a bolt, so as to prevent the first sealing member 41 from moving and ensure the sealing effect.

The sealing end 4 further includes a second sealing member 43 and a second compressing member 44. The second sealing member 43 and the second compressing member 44 are clamped between the submarine cable 1 and the sealing cylinder 3 sequentially; where the first sealing member 41 is located between the abutting part 31 and the second compressing member 44, and the second sealing member 43 is located between the first compressing member 42 and the second compressing member 44.

The second sealing member 43 and the second compressing member 44 in the present application may both be of annular structures.

The second sealing member 43 in the present application is a V-shaped sealing member; an opening of the V-shaped sealing member faces the first compressing member 42; the first compressing member 42 has an end part opposite to the opening; a side of the second compressing member 44 close to the V-shaped sealing member is provided with an arc-shaped groove matching a shape of the end part.

Specifically, an end face of the first compressing member 42 close to the V-shaped sealing member is provided with a V-shaped protrusion; the V-shaped protrusion matches the opening of the V-shaped sealing member; the V-shaped protrusion abuts against the opening of the V-shaped sealing member; an end face of the second compressing member 44 close to the V-shaped sealing member is provided with an arc-shaped groove; the arc-shaped groove matches the V-shaped protrusion, so as to match the V-shaped sealing member with the first compressing member 42 and the second compressing member 44, which can prevent the V-shaped sealing member from moving relative to the sealing cylinder 3 during deformation to affect the sealing effect, and ensure radial sealing and waterproofing.

In the present application, there are a plurality of V-shaped sealing members, the number of which can be adjusted according to water pressure requirements; the more the quantity, the stronger the pressure-bearing capacity. As shown in FIG. 2, the V-shaped sealing members may be 4 in quantity.

The first sealing member 41 in the present application is a conical sealing member; an inner wall surface of the sealing cylinder 3 is adapted to the conical sealing member, as shown in FIG. 2.

In the present application, a mode of combining the conical sealing member and the V-shaped sealing member is adopted for sealing between the submarine cable 1 and the sealing cylinder 3, which has a good sealing effect, can meet the waterproof sealing requirements for water depths within 500 meters, and improves the sealing performance of the submarine cable joint box under deep-water working conditions.

The submarine cable joint box provided in the present application further includes a sealing assembly 8. The sealing cylinder 3 includes a plurality of sequentially connected cylinder bodies, and the sealing assembly 8 is clamped between a connection of two adjacent cylinder bodies and the intermediate connector 2.

With reference to FIG. 1, the sealing cylinder 3 includes a first cylinder body, a second cylinder body and a third cylinder body; two ends of the second cylinder body are communicated with the first cylinder body and the third cylinder body respectively (flange faces of two adjacent cylinder bodies may be connected through a bolt); the sealing assembly 8 is arranged between the intermediate connector 2 and an inner wall surface of a connection of the first cylinder body and the second cylinder body to prevent external water from entering through the connection of the first cylinder body and the second cylinder body to contact the intermediate connector 2, thereby achieving sealing; the sealing assembly 8 is arranged between the intermediate connector 2 and an inner wall surface of a connection of the second cylinder body and the third cylinder body to prevent water from entering through the connection of the second cylinder body and the third cylinder body to contact the intermediate connector 2, thereby achieving sealing.

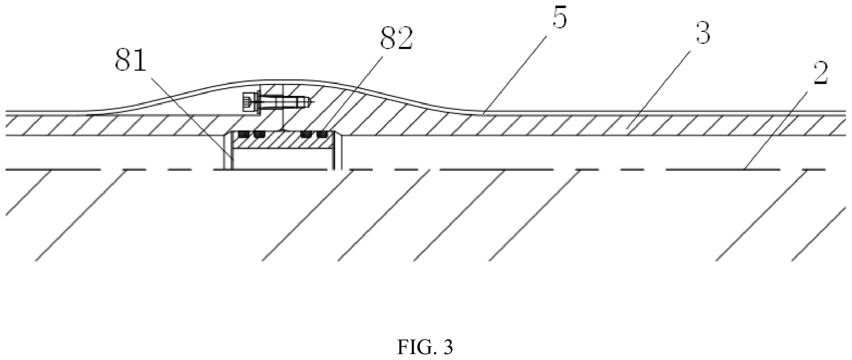

With reference to FIG. 3, the sealing assembly 8 includes a sealing bushing 81; the sealing bushing 81 is sleeved on a peripheral wall of the intermediate connector 2; the sealing bushing 81 is clamped between the intermediate connector 2 and a connection of two adjacent cylinder bodies to prevent external water from contacting the intermediate connector 2, thereby achieving sealing.

Further, the sealing assembly 8 further includes a plurality of third sealing members 82; the plurality of third sealing members 82 are spaced apart and clamped between the sealing bushing 81 and the cylinder body to prevent the sealing bushing 81 from moving and ensure the sealing effect. The third sealing member 82 in the present application may be an O-shaped sealing ring.

The present application further provides a submarine cable 1 system, including the submarine cable joint box according to any one of the foregoing embodiments.

Finally, it should be noted that the foregoing embodiments are merely intended for describing the technical solutions of the present application other than limiting the present application. Although the present application is described in detail with reference to the foregoing embodiments, persons of ordinary skill in the art should understand that they may still make modifications to the technical solutions described in the foregoing embodiments or make equivalent substitutions to some technical features therein, and these modifications or substitutions do not make the essence of the corresponding technical solutions depart from the spirit and scope of the technical solutions of the embodiments of the present application.

## Claims

1. A submarine cable joint box, **characterized in that**, two submarine cables are joined by an intermediate connector, and the submarine cable joint box comprise: sealing ends, a sealing cylinder and a heat shrink tube; wherein the sealing cylinder is sleeved on the intermediate connector, the submarine cables at two ends of the intermediate connector are sleeved with the sealing ends respectively, and two ends of the sealing cylinder are in sealed connection with corresponding sealing ends respectively; the two sealing ends, the sealing cylinder and the intermediate connector form an accommodation chamber, and the accommodation chamber is filled with a waterproof sealant; the heat shrink tube is sleeved on the sealing cylinder and the sealing ends, and two ends of the heat shrink tube are in heat shrink connection with the submarine cables at the two ends respectively.

2. The submarine cable joint box according to claim 1, wherein, the sealing end comprises a first sealing member, the first sealing member is sleeved on a peripheral wall of the submarine cable and clamped between the sealing cylinder and the submarine cable.

3. The submarine cable joint box according to claim 2, wherein, two ends of the sealing cylinder are each provided with an abutting part, the abutting part abuts against a corresponding submarine cable, the sealing end further comprises a first compressing member, the first compressing member is connected to the sealing cylinder, and the first compressing member cooperates with the abutting part to restrict the first sealing member.

4. The submarine cable joint box according to claim 3, wherein, the sealing end further comprises a second sealing member and a second compressing member, the second sealing member and the second compressing member are clamped between the submarine cable and the sealing cylinder sequentially;
wherein the first sealing member is located between the abutting part and the second compressing member, and the second sealing member is located between the first compressing member and the second compressing member.

5. The submarine cable joint box according to claim 4, wherein, the second sealing member is a V-shaped sealing member, an opening of the V-shaped sealing member faces the first compressing member, the first compressing member has an end part opposite to the opening, and a side of the second compressing member close to the V-shaped sealing member is provided with an arc-shaped groove matching a shape of the end part.

6. The submarine cable joint box according to claim 4, wherein, the first sealing member is a conical sealing member, and an inner wall of the sealing cylinder is adapted to the conical sealing member.

7. The submarine cable joint box according to any one of claims 1-6, wherein, the submarine cable joint box further comprises a sealing assembly, the sealing cylinder comprises a plurality of sequentially connected cylinder bodies, and the sealing assembly is clamped between a connection of two adjacent cylinder bodies and the intermediate connector.

8. The submarine cable joint box according to claim 7, wherein, the sealing assembly comprises a sealing bushing, and the sealing bushing is sleeved on a peripheral wall of the intermediate connector.

9. The submarine cable joint box according to claim 8, wherein, the sealing assembly further comprises a plurality of third sealing members, and the plurality of third sealing members are spaced apart and clamped between the sealing bushing and the cylinder body.

10. A submarine cable system, **characterized by** comprising the submarine cable joint box according to any one of claims 1-9.
